# EUROPÄISCHE PATENTSCHRIFT

(11) **EP 2 443 378 B1**
(45) Veröffentlichungstag und Bekanntmachung des Hinweises auf die Patenterteilung: **20.04.2016**
(21) Anmeldenummer: 10732622.5
(22) Anmeldetag: 25.05.2010
(51) Int. Cl.: F16L 37/244

(54) **STECKVERBINDUNGSANORDNUNG**
PLUG-IN CONNECTION ARRANGEMENT
SYSTÈME DE RACCORDEMENT PAR ENFICHAGE

(30) Priorität: 18.06.2009 DE 102009025615; 12.04.2010 DE 102010014670
(43) Veröffentlichungstag der Anmeldung: 25.04.2012
(73) Patentinhaber: Schaeffler Technologies AG & Co. KG, 91074 Herzogenaurach (DE)
(72) Erfinder: TAMAAZOUSTI, Ahmed, F-45000 Orleans (FR); BAUMANN, Matthias, 77815 Bühl (DE); CHRISTIAENS, Yannick, F-45470 Loury (FR); CONSTANTIN, Sebastien, F-45800 St Jean de Braye (FR); SIFFELET, David Roger Lucien, F-45300 Courcelles (FR); CARIGNON, Loic, F-45450 Donnery (FR); SESTER, Christof, 77723 Gengenbach (DE); WAGNER, Vadim, 77652 Offenburg (DE); LECOINTRE, Jean-Michel, F-45450 Donnery (FR); DECHORAIN, Cyril, F-45460 Bray en Val (FR)
(86) Internationale Anmeldenummer: PCT/DE2010/000578
(87) Internationale Veröffentlichungsnummer: WO 2010/145632

(56) Entgegenhaltungen:
- DE-A1-102007 003 048
- DE-B3-102006 013 899
- DE-U1- 9 005 373
- DE-U1- 29 514 822
- GB-A- 2 147 680

## Beschreibung

Die Erfindung betrifft eine Steckverbindungsanordnung mit einem ersten Steckverbindungsende, das so in ein zweites Steckverbindungsende einsteckbar ist, dass die beiden Steckverbindungsenden unter Ausbildung einer Fluidverbindung fluiddicht miteinander verbunden sind.

Aufgabe der Erfindung ist es, die Montage einer Steckverbindungsanordnung gemäß dem Oberbegriff des Patentanspruchs 1, wie sie aus der DE-U-295 14 822 bekannt ist, zu vereinfachen beziehungsweise zu verbessern.

Die Aufgabe ist bei einer Steckverbindungsanordnung mit einem ersten Steckverbindungsende, das so in ein zweites Steckverbindungsende einsteckbar ist, dass die beiden Steckverbindungsenden unter Ausbildung einer Fluidverbindung fluiddicht miteinander verbunden sind, durch die Merkmale des Anspruchs 1 gelöst.

Durch das Eingreifen der Fixiersegmente in die Fixiernut kann auf einfache Art und Weise eine stabile Befestigung der beiden Steckverbindungsenden aneinander ermöglicht werden, und zwar ohne Zuhilfenahme weiterer Befestigungsmittel. Der Ringkörper ermöglicht eine begrenzte Bewegung der Fixiersegmente relativ zueinander bei der Montage.

Beim Vorfixieren werden die Fixiersegmente über die Rampengeometrie in Eingriff mit der Fixiernut gebracht. Die Rampengeometrie umfasst vorzugsweise jeweils eine Rampe pro Fixiersegment.

Durch Verdrehen der beiden Steckverbindungsenden gegeneinander werden die Fixiersegmente tiefer in Eingriff mit der Fixiernut gebracht. Durch eine spezielle Kontur der Fixiernut kann auf einfache Art und Weise ein Einschnappen der Fixiersegmente in die Fixiernut bewirkt werden.

Ein bevorzugtes Ausführungsbeispiel der Steckverbindungsanordnung ist dadurch gekennzeichnet, dass der Ringkörper durch Federarme einstückig mit dem ersten Steckverbindungsende verbunden ist. Die Federarme ermöglichen eine Bewegung des Ringkörpers mit den Fixiersegmenten relativ zu dem ersten Steckverbindungsende.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein erstes Steckverbindungsende einer Steckverbindungsanordnung gemäß einem ersten Ausführungsbeispiel;
- Figur 2: die Steckverbindungsanordnung mit dem Steckverbindungsende aus Figur 1 in einem Längsschnitt;
- Figur 3: einen gegenüber Figur 2 um 90 Grad verdrehten Längsschnitt;
- Figur 4: ein zweites Steckverbindungsende der Steckverbindungsanordnung aus den Figuren 2 und 3;
- Figur 5: die Steckverbindungsanordnung aus den Figuren 2 und 3 im Querschnitt in einem vorfixierten Zustand;
- Figur 6: den gleichen Querschnitt wie in Figur 5 im fixierten Zustand;
- Figur 7: die gleiche Ansicht wie in Figur 1 mit einer Maßangabe;
- Figur 8: das zweite Steckverbindungsende im Querschnitt mit Maßangaben;
- Figur 9: den gleichen Querschnitt wie in Figur 8 gemäß einem weiteren Ausführungsbeispiel;
- Figur 10: den gleichen Querschnitt wie in den Figuren 8 und 9 gemäß einem weiteren Ausführungsbeispiel;

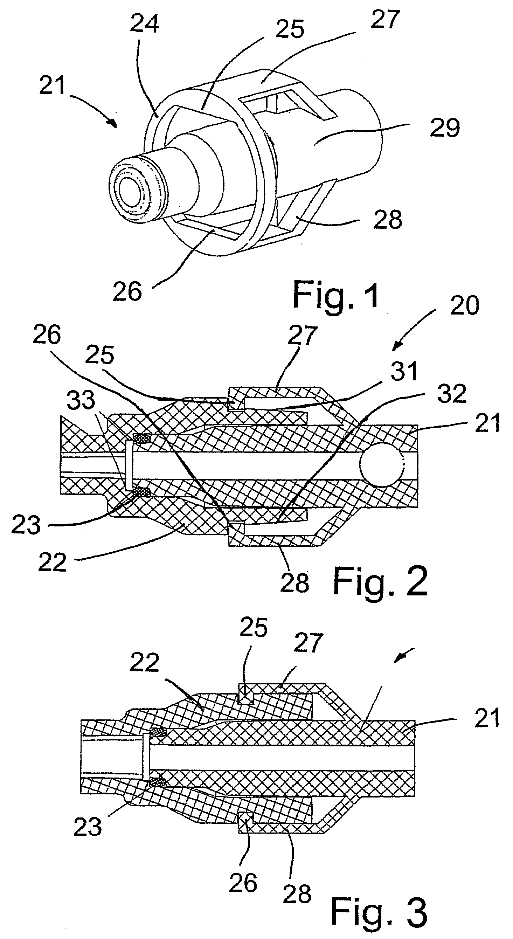

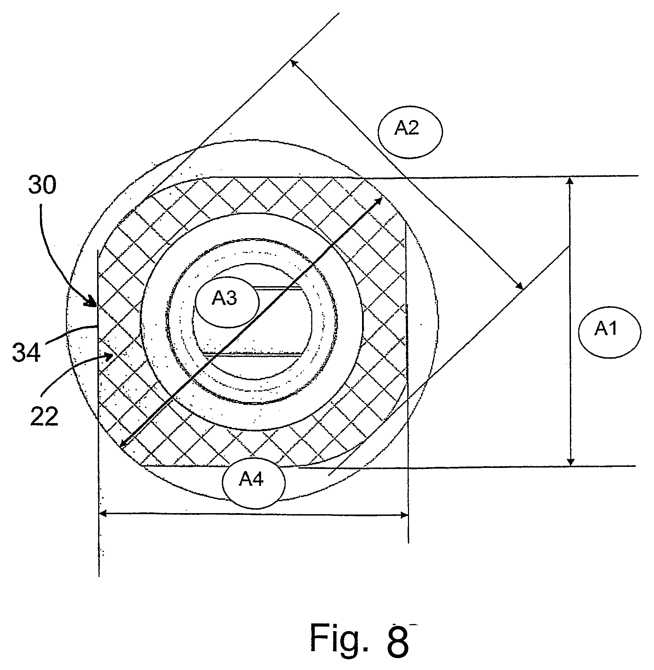

In den Figuren 1 bis 10 ist eine Steckverbindungsanordnung 20 mit einem ersten Steckverbindungsende 21 und einem zweiten Steckverbindungsende 22 in verschiedenen Ansichten und Ausführungsbeispielen dargestellt. Zur Abdichtung ist an dem Ende des ersten Steckverbindungsendes 21 eine Dichtung 23 vorgesehen.

Das erste Steckverbindungsende 21 umfasst einen Ringkörper 24 mit zwei Fixiersegmenten 25, 26. Der Ringkörper 24 ist durch Federarme 27, 28 einstückig mit einem rohrförmigen Grundkörper 29 des ersten Steckverbindungsendes 21 verbunden.

Das zweite Steckverbindungsende 22 weist radial außen eine Fixiernut 30 auf, die eine Eingriffsmöglichkeit für die Fixiersegmente 25, 26 des ersten Steckverbindungsendes 21 darstellt. Das zweite Steckverbindungsende 22 weist an seinem freien Ende zwei Rampen 31, 32 auf, die beim Zusammenstecken der beiden Steckverbindungsenden 21, 22 mit den Fixiersegmenten 25, 26 zusammenwirken. Darüber hinaus weist die Fixiernut 30 eine Nutkontur 34 auf, die dazu dient, die beiden Steckverbindungsenden 21, 22 stabil miteinander zu verbinden.

Die Montage der Steckverbindungsanordnung 20 erfolgt in zwei Schritten. Zunächst wird das erste Steckverbindungsende 21 mit den beiden Kreissegmenten 25, 26, die auch als Ringverstärkungen bezeichnet werden, auf die Rampen 31, 32 des zweiten Steckverbindungsendes 22 geschoben. Dabei rasten die beiden Kreissegmente 25, 26 leicht in die Fixiernut 30 des zweiten Steckverbindungsendes 22 ein, so dass eine Vorfixierung des ersten Steckverbindungsendes 21 sichergestellt ist. Diese Vorfixierung wird auch als Vormontagezustand bezeichnet. Ein Toleranzausgleich erfolgt über die als O-Ring ausgeführte Dichtung 23 und einen umlaufenden Vorsprung 33 an dem zweiten Steckverbindungsende 22.

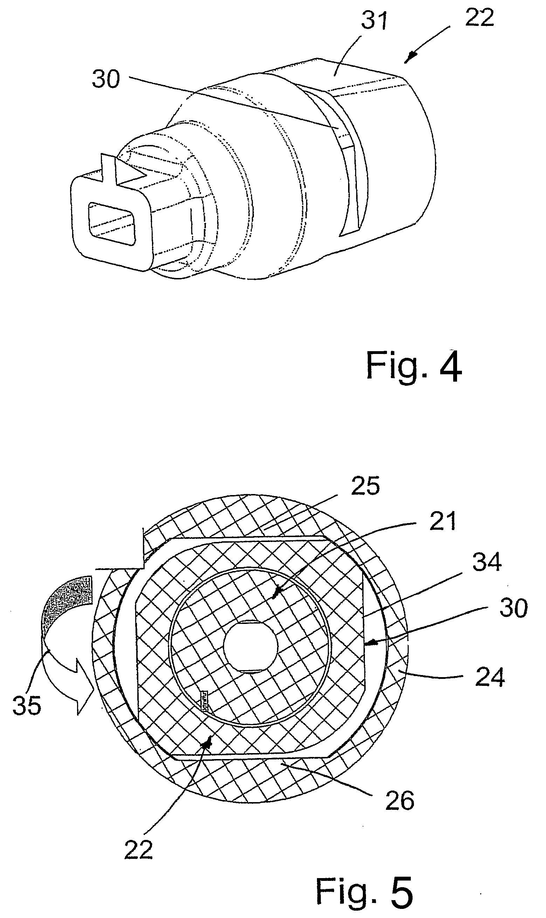

Die Endmontage erfolgt, wie in Figur 5 durch einen Pfeil 35 angedeutet ist, durch Drehen des ersten Steckverbindungsendes 21 entgegen dem Uhrzeigersinn relativ zu dem zweiten Steckverbindungsende 22. Dadurch verschieben sich die Kreissegmente 25, 26 in der Fixiernut 30 soweit, bis sie ihre maximale Überdeckung zur Nutoberkante der Fixiernut 30 erreichen. Die Nutkontur 34, die auch als Nutgrund bezeichnet wird, ist speziell so gestaltet, dass sich während des Drehvorgangs eine spürbare Drehmomentänderung ergibt. Das kann durch verschieden große, diagonal symmetrisch verteilte Radien im Nutgrund erreicht werden. Vorzugsweise liegt ein erkennbares Signal vor, wenn der Endmontagezustand erreicht ist. Dadurch kann ein unerwünschtes Überdrehen des Steckverbindungsendes 21 vermieden werden.

Nach der Montage besteht zwischen den beiden Steckverbindungsenden 21 und 22 eine Vorspannung. Die Vorspannung wird durch den geschlossenen Ringkörper 24 sowie die Federarme 27, 28 aufgebaut. Die Fixiernut 30 ist vorzugsweise so gestaltet, dass sie hinterschnittfrei entformt werden kann. Der Ringkörper 24 mit den Kreissegmenten 25 und 26 kann axial entformt werden. Die Steckverbindungsanordnung 20 ist beliebig oft lösbar.

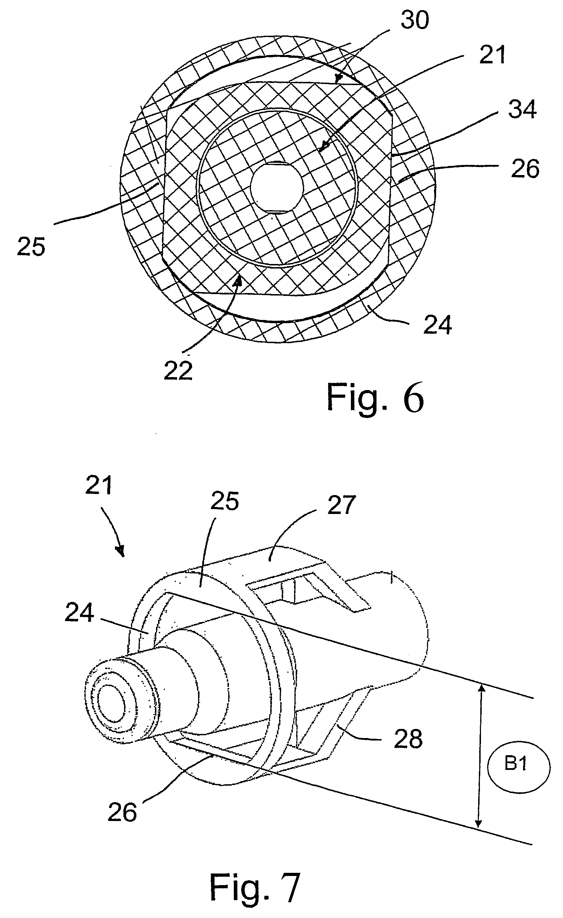

Der vorab beschriebene Einschnappeffekt während der Montagedrehung der beiden Steckverbindungsenden 21, 22 relativ zueinander wird im Folgenden anhand der Figuren 7 bis 10 und der darin verwendeten Maßangaben A1, A2, A3, A4 und B1 ausführlich erläutert. Der Abstand A1 der beiden Nutgründe der Fixiernut 30 entspricht dem Abstand B1 der beiden Kreissegmente 25, 26, beziehungsweise kann etwas größer ausgeführt werden. Der Abstand A2 hingegen ist größer als B1. Dadurch müssen während der Drehung die Kreissegmente 25, 26 von Abstand B1 auf A2 aufgeweitet werden.

Der Abstand A2 kann durch beliebige Formen, beispielsweise Radien oder Ecken, erzeugt werden. Nach der Drehung der Kreissegmente 25, 26 über den Abstand A2 werden sie auf den Abstand A4 leicht vorgespannt und haben damit ihre Endlage erreicht. Durch den Abstand A3 wird diese Endlage begrenzt. Der Abstand A3 muss größer als A2 sein, um ein Drehen der Kreissegmente 25, 26 über A3 zu verhindern. Der Abstand A3 kann durch beliebige Formen, wie Radien oder Ecken, begrenzt werden. Im Extremfall kann der Abstand A2 auch gleich oder größer als der Abstand A3 sein.

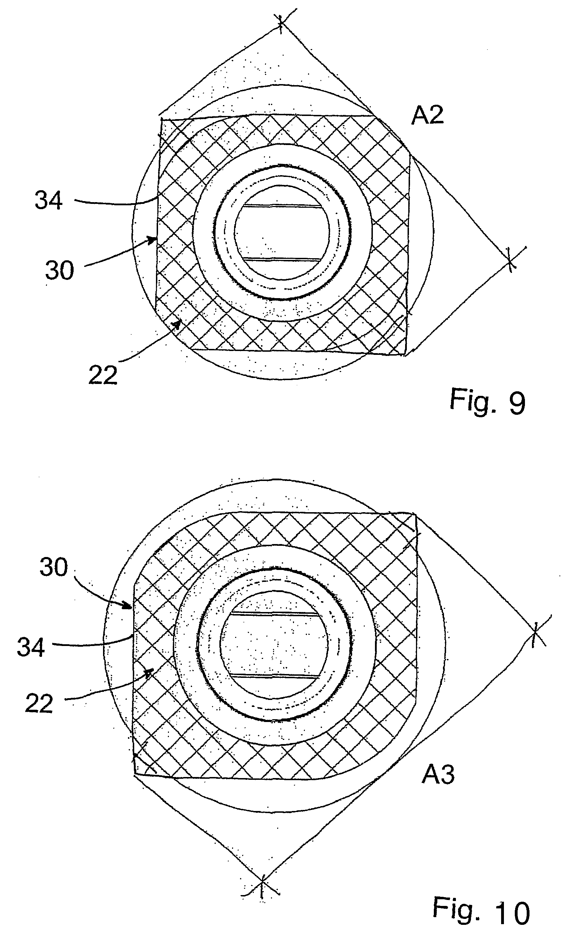

Nach der Montage wird ein unerwünschtes Aufspreizen der Federarme 27, 28 durch den Ringkörper 24 wirkungsvoll verhindert. Dadurch kann im Endmontagezustand eine wesentlich höhere Abzugskraft sichergestellt werden als bei bekannten Schnapphaken. In Figur 9 ist angedeutet, wie der Abstand A2 durch Ecken an dem zweiten Steckverbindungsende 22 erzeugt werden kann. In Figur 10 ist angedeutet, wie der Abstand A3 durch Ecken an dem zweiten Steckverbindungsende 22 erzeugt werden kann.

### Bezugszeichenliste

- 20: Steckverbindungsanordnung
- 21: erstes Steckverbindungsende
- 22: zweites Steckverbindungsende
- 23: Dichtung
- 24: Ringkörper
- 25: Fixiersegment
- 26: Fixiersegment
- 27: Federarm
- 28: Federarm
- 29: rohrförmiger Grundkörper
- 30: Fixiernut
- 31: Rampe
- 32: Rampe
- 33: Vorsprung
- 34: Nutkontur
- 35: Pfeil

## Patentansprüche

1. Steckverbindungsanordnung (20) mit einem ersten Steckverbindungsende (21) und einem zweiten Steckverbindungsende (22), wobei das erste Steckverbindungsende (21) so in das zweite Steckverbindungsende (22) einsteckbar ist, dass die beiden Steckverbindungsenden (21,22) unter Ausbildung einer Fluidverbindung fluiddicht miteinander verbunden sind, wobei an dem ersten Steckverbindungsende (21) ein Ringkörper (24) mit Fixiersegmenten (25,26) angebracht ist, die in eine Fixiernut (30) eingreifen, die an dem zweiten Steckverbindungsende (22) vorgesehen ist, wobei an dem zweiten Steckverbindungsende (22) vor der Fixiernut (30) eine Rampengeometrie (31,32) vorgesehen ist,
**dadurch gekennzeichnet, dass** die Rampengeometrie (31, 32) mit den Fixiersegmenten (25,26) zusammenwirkt, um die beiden Steckverbindungsenden (21,22) vorzufixieren, und dass die beiden vorfixierten Steckverbindungsenden (21,22) zum Fixieren so verdrehbar sind, dass die in der Fixiernut (30) vorfixierten Fixiersegmente (25,26) beim Drehen in der Fixiernut (30) einschnappen.

2. Steckverbindungsanordnung (20) nach Anspruch 1, **dadurch gekennzeichnet, dass** eine Nutkontur (34) der Fixiernut (30) zur Änderung eines notwendigen Drehmoments während des Fixierens ausgebildet ist.

3. Steckverbindungsanordnung (20) nach Anspruch 2, **dadurch gekennzeichnet, dass** zwei der Nutgründe der Fixiernut (30) einen Abstand (A1) aufweisen, der gleich oder etwas größer als der Abstand (B1) der Fixiersegmente (25, 26) ist, und die Fixierelemente (25, 26) im Verlauf der Drehung auf einen Abstand (A2) aufgeweitet werden, der größer als der erste Abstand (B1) ist, und die Fixierelemente (25, 26) in der Endlage der Drehung auf einen dritten Abstand (A4) vorgespannt werden, wobei ein letzter Abstand (A3), der größer als der dritte Abstand (A4) ist, als Drehbegrenzung wirkt.

4. Steckverbindungsanordnung (20) nach einem der vorangehenden Ansprüche, **dadurch gekennzeichnet, dass** der Ringkörper (24) durch Federarme (27, 28) einstückig mit dem ersten Steckverbindungsende verbunden ist.

## Claims

1. Plug connection arrangement (20) with a first plug connection end (21) and a second plug connection end (22), wherein the first plug connection end (21) can be inserted into the second plug connection end (22) in such a way that the two plug connection ends (21, 22) are connected to one another in a fluid-tight manner so as to form a fluid connection, wherein an annular body (24) with fixing segments (25, 26) is fitted to the first plug connection end (21), the said fixing segments engaging into a fixing groove (30) which is provided at the second plug connection end (22), wherein a ramp geometry (31, 32) is provided on the second plug connection end (22) in front of the fixing groove (30),
**characterized in that** the ramp geometry (31, 32) interacts with fixing segments (25, 26) in order to prefix the two plug connection ends (21, 22), and **in that** the two prefixed plug connection ends (21, 22) can be rotated, for fixing purposes, such that the fixing segments (25, 26) which are prefixed in the fixing groove (30) snap into the fixing groove (30) in the event of rotation.

2. Plug connection arrangement (20) according to Claim 1, **characterized in that** a groove contour (34) of the fixing groove (30) is designed to change a required torque during the fixing operation.

3. Plug connection arrangement (20) according to Claim 2, **characterized in that** two of the groove bases of the fixing groove (30) are at a distance (A1) which is identical or somewhat greater than the distance (B1) of the fixing segments (25, 26), and the fixing elements (25, 26) are widened to a distance (A2), which is greater than the first distance (B1), during the course of the rotation, and the fixing elements (25, 26) are prestressed at a third distance (A4) in the end position of the rotation, wherein a last distance (A3), which is greater than the third distance (A4), acts as a rotation limiting means.

4. Plug connection arrangement (20) according to one of the preceding claims, **characterized in that** the annular body (24) is integrally connected to the first plug connection end by spring arms (27, 28).

## Revendications

1. Système de connexion par enfichage (20) comprenant une première extrémité de connexion par enfichage (21) et une deuxième extrémité de connexion par enfichage (22), la première extrémité de connexion par enfichage (21) pouvant être enfichée dans la deuxième extrémité de connexion par enfichage (22) de telle sorte que les deux extrémités de connexion par enfichage (21, 22) soient connectées en affleurement l'une avec l'autre de manière étanche aux fluides en réalisant une connexion fluidique, un corps annulaire (24) avec des segments de fixation (25, 26) étant monté sur la première extrémité de connexion par enfichage (21), lesquels segments de fixation viennent en prise dans une rainure de fixation (30) qui est prévue au niveau de la deuxième extrémité de connexion par enfichage (22), une géométrie de rampe (31, 32) étant prévue au niveau de la deuxième extrémité de connexion par enfichage (22) devant la rainure de fixation (30), **caractérisé en ce que** la géométrie de rampe (31, 32) coopère avec les segments de fixation (25, 26) afin de préfixer les deux extrémités de connexion par enfichage (21, 22) et **en ce que** les deux extrémités de connexion par enfichage préfixées (21, 22) peuvent tourner pour la fixation de telle sorte que les segments de fixation (25, 26) préfixés dans la rainure de fixation (30) s'encliquètent lors de la rotation dans la rainure de fixation (30).

2. Système de connexion par enfichage (20) selon la revendication 1, **caractérisé en ce qu'**un contour de rainure (34) de la rainure de fixation (30) est réalisé de manière à modifier un couple nécessaire pendant la fixation.

3. Système de connexion par enfichage (20) selon la revendication 2, **caractérisé en ce que** deux des bases de rainure de la rainure de fixation (30) présentent une distance (A1) qui est égale ou quelque peu supérieure à la distance (B1) des segments de fixation (25, 26), et les éléments de fixation (25, 26) sont élargis au cours de la rotation à une distance (A2) qui est supérieure à la première distance (B1), et les éléments de fixation (25, 26), dans la position de fin de course de la rotation, étant précontraints à une troisième distance (A4), une dernière distance (A3), qui est supérieure à la troisième distance (A4), agissant en tant que limite de rotation.

4. Système de connexion par enfichage (20) selon l'une quelconque des revendications précédentes, **caractérisé en ce que** le corps annulaire (24) est connecté par des bras de ressort (27, 28) d'une seule pièce à la première extrémité de connexion par enfichage.
